# EUROPEAN PATENT APPLICATION

(11) **EP 0 576 751 A1**
(43) Date of publication of application: **05.01.1994**
(21) Application number: 92306075.0
(22) Date of filing: 01.07.1992
(51) Int. Cl.: B65B 7/18, B65B 51/20

(54) **Heat sealing of carton blanks in constructing or closing cartons**

(71) Applicant: Tetra Laval Holdings & Finance SA, 1009 Pully (CH)
(72) Inventor: Mosse, Richard Wolfgang Emil, London NW8 0QG (GB)
(74) Representative: Smart, Peter John

(57) **Abstract**

Carton packing machinery for the construction or closing of cartons including a heater for effecting heating in heat sealing operations. The heater comprises a nozzle (10) with jets (16, 18) which direct heated gas on to portions of carton material intended to be sealed together. The jets direct the hot gas obliquely on to the material so that the areas to be heat sealed together can be more precisely defined compared to jets which direct hot gas transversely on to the material.

## Description

The present invention relates to the heat sealing of carton blanks in the construction or closing of cartons and, in particular, to carton packing machines including means for joining portions of the carton to one another by heat sealing, using heater nozzles to direct a flow of hot air to effect sealing of such carton blanks.

Cartons for the packing of liquids such as milk, fruit juice and soft drinks, are usually produced from plastics coated paperboard or cardboard by heat sealing the plastics coating layers together to construct the carton and to close it.

Conventionally the heat sealing operation is carried out by warming the plastics coating layers of the carton material with jets of hot air to raise the plastics coating to a heat sealing temperature before pressing together portions of the carton to be joined.

The jets of hot air used for this purpose are conventionally directed at right angles to the surface of the carton blank which is to be heated. However, EP-A-0028941 discloses direction heater air obliquely on to the interior carton wall surfaces and downwardly into the carton.

Where it is necessary to heat the internal surfaces of the carton material at the carton mouth prior to closing the mouth of the carton, this is conventionally done by inserting into the carton mouth a heater nozzle which takes the form of closed-ended tube having a multitude of gas jet outlets arranged in a band transversely about its periphery through which heated air supplied into the nozzle escapes and is directed on to the walls of the carton at the carton mouth. The jets are normally produced by drilling holes at right angles to the walls of the nozzle and the gas flow from them therefrom impinges substantially at right angles on the walls of the carton which in use lie adjacent to and parallel to the outer surface of the nozzle.

We have now devised opening arrangements for cartons of this type designed for easy opening in which a pouring spout is provided by a portion of a front panel of the carton which portion can be pulled forward during opening of the carton to provide the pouring spout. In one such arrangement the upper margin of the pouring spout is defined by the upper edge of a shortened front panel which upper margin is sealed externally when the carton is closed during packing but must remain unsealed internally if the user is to be able to pull out the spout once the external seal has been broken. In another a front panel having a central region of reduced height is employed. Sealing of the side panels to this part of the front panel must be avoided.

The need now therefore arises for increased precision in the location and area of the zone of internal sealing produced during closure of the tops of carton of these kinds.

We have found that it is possible to decrease the tendency of the sealed zone to encroach in an undesired direction by angling the jets directing heated air on to the carton walls in the opposite direction.

The present invention now therefore provides in a first aspect a carton packing machine comprising means for joining portions of a carton to one another by heat-sealing to close the top of said carton, which means comprises a heater having a heater nozzle for fitting inside the mouth of a carton to be closed, which nozzle has a plurality of gas outlet jets for the supply of heated gas to warm said carton portions to a sealing temperature by directing said heated gas on to said portions, which jets are arranged so as in use to be directed at an oblique angle on to said carton portion and toward said carton mouth.

Preferably, said nozzle has a proximal gas inlet end and a closed distal end for insertion into a carton mouth and comprises nozzle walls enclosing a gas passageway and further comprises a multitude of said gas outlet jets extending from said gas passageway to the external surface of said walls obliquely away from said distal end. Typically, the gas passageway will be closed downstream of the location of the outlet jets, e.g. at the distal end of the nozzle.

Preferably, the nozzle is generally rectangular in transverse cross-section.

Preferably, each of a pair of opposed faces of such a generally rectangular section nozzle is externally concave when viewed in transverse cross-section.

For instance, each of said pair of opposed faces may be divided into a pair of subsidiary faces which meet at an obtuse angle along a line extending longitudinally of the nozzle, which line may lie approximately in a longitudinal mid plane of the nozzle.

A nozzle so shaped is well adapted for use in forming the internal seal of a bellows or gable-type closure.

Preferably, said multitude of jets is arranged in a band shaped zone around at least three faces of said nozzle.

For use in forming an easy-open closure of the kind referred to above, it is preferable that on each of a pair of opposed faces of said nozzle, said zone has a first portion of lesser width and a second portion of greater width, said second portions lying adjacent corresponding edges of their respective faces.

Preferably, that part of the zone that lies on the face of nozzle joining said edges and connects said second portions is of a width smaller than said greater width.

Said lesser width may for instance be from 30 to 60 percent of said greater width. Said portion of greater width may occupy from 20 to 60 percent of the length of the part of the zone which lies on the respective face of the nozzle.

The face of the nozzle joining said edges and connecting said second portions is preferably one of those which is externally concave in transverse cross-section referred to above.

The first aspect of the invention includes a hot air nozzle for a carton packing machine which has a proximal gas inlet and a closed distal end for insertion into a carton mouth, and which is generally rectangular in transverse cross-section but in which each of a pair of opposed faces of said nozzle is externally concave when viewed in transverse cross-section, which nozzle comprises nozzle walls enclosing a gas passageway and further comprises a multitude of gas outlet jets extending from said gas passageway to the external surface of said walls and emerging obliquely away from the distal end. Such a nozzle may have the preferred features described above.

The gas jets may be arranged at an angle to the nozzle wall as it extends towards the distal end of the nozzle (measured in a plane perpendicular to the wall at the jet) of from 100 to 160°, more preferably 120 to 150°, e.g. 135°.

The first aspect of the invention also includes a method of heating a heat sealable portion of a carton blank in closing a carton by heat sealing, which method comprises directing heated gas on to a first zone of said blank to warm said first zone to a heat sealing temperature, said first zone being bordered on one side by a second zone which contains the upper margin of a pull-out spout portion of the blank or is to be bonded to a zone which contains the upper margin of a pull-out spout portion of the blank the heating of which second zone is unwanted or to be avoided and being bordered on the opposite side by an edge of the blank or by a third zone, the heating of which can be tolerated, wherein said heated gas is discharged on to said first zone of the blank through jets directed obliquely away from said second zone and towards the said edge of the blank or said third zone.

The upper margin of the pull-out spout portion may be defined by a slit extending across a panel of the blank or by the top edge of a panel of the blank. Cartons of this type are described in our co-pending British Patent Application No. 9103183.1 filed on 14th February 1991.

Alternatively, the pouring spout may be provided by a portion of a front panel of the carton which portion can be pulled forward during opening of the carton to provide the pouring spout, in which the upper margin of the pouring spout is defined by the upper edge of a shortened front panel which upper margin is sealed externally when the carton is closed during packing but must remain unsealed internally if the user is to be able to pull out the spout once the external seal has been broken.

We have found that it is desirable to control the depth of the heated zone of the side panels of the carton top by the use of angled gas jets of the type described above. As described above, we have found that it is possible to decrease the tendency of the sealed zone to encroach in an undesired direction by angling the jets directing heated air on to the carton walls in the opposite direction.

Further we have found a need to prevent hot air directed at the outside of the upper part of the carton front panel from spilling over into the interior and causing inappropriate heating.

The present invention now therefore provides in a second aspect a carton packing machine comprising means for joining portions of a carton to one another by heat-sealing, which means comprises a heater having at least one gas outlet jet for the supply of heated gas to warm a said carton portion to a sealing temperature by directing said heated gas on to said portion, which nozzle is provided with a shield member extending from the nozzle in the general direction of the gas flow from the said jet.

Preferably, said heater nozzle is for positioning alongside the mouth of a carton to be closed, and has a plurality of said gas jets arranged to be directed against the walls of the carton adjacent the carton mouth.

Preferably, said nozzle has a proximal gas inlet and a closed distal end and comprises nozzle walls enclosing a gas passageway and further comprises a multitude of said gas outlet jets extending from said gas passageway to the external surface of said walls. Said nozzle walls may include a pair of substantially planar walls which meet at an obtuse angle and comprise a band of said gas outlet jets extending from said gas passageway to the external surface of said walls. Said shield member preferably lies immediately adjacent said band and extends alongside a portion thereof. The shield member may lie between the said portion of the band and the inlet end of said nozzle.

Said band may preferably have a first portion of lesser width and second and third portions of greater width, said second and third portions lying at respective ends of said first portion and said shield member extending alongside said first portion between said second and third portions of said band.

The heat sealing machine may comprise a nozzle assembly which includes said heater nozzle as a first heater nozzle and further includes a second heater nozzle and a third heater nozzle. The first and third heater nozzles may be disposed one on either side of said second heater nozzle such that a carton mouth may be positioned over said second heater nozzle and between said first and third heater nozzles so as to be heated on interior surfaces by said second heater nozzle and on oppositely directed exterior surfaces of said first and third heater nozzles.

In transverse cross-section, said second nozzle may have the form of a waisted quadrilateral and said first and third nozzles may be positioned opposite the faces of the second nozzle which contain said waist.

The said nozzle may have a multitude of gas outlet jets arranged in a band extending around approximately three quarters of the perimeter of said nozzle including that part thereof which is opposite to said third nozzle and those parts extending between said third nozzle and said first nozzle.

Said band of gas outlet jets on said second nozzle may be relatively wide opposite said third nozzle and on each of those parts extending between said third nozzle and said first nozzle may have a relatively wide portion nearest to said third nozzle and a relatively narrow portion extending therefrom towards said first nozzle.

Said relatively wide portions of said band in the part thereof extending between said third nozzle and said first nozzle are preferably somewhat shorter than or of approximately equal length to the relatively narrow portions, e.g. from 30 to 50 percent of the length of the narrow portions.

The gas outlet jets in said relatively narrow portions of said band may preferably be angled to extend in use toward the mouth of a container being closed in said machine, i.e. angled away from the closed end of the nozzle. Thus, the second nozzle may be in accordance with the first aspect of the invention.

The second aspect of the invention includes a hot air nozzle for a carton packing machine which has a proximal gas inlet and a closed distal end and comprises nozzle walls including a gas passageway and further comprises a multitude of gas outlet jets extending from said gas passageway to the external surface of at least one of said walls and a heat shield member extending from said nozzle in the general direction of gas flow from said jets. Preferred features of such nozzles are described above.

The second aspect of the invention also includes a nozzle assembly which includes a heater nozzle of the invention as described above as a first heater nozzle and further includes a second heater nozzle and a third heater nozzle, wherein said first and third heater nozzles are disposed one on either side of said second heater nozzle such that a carton mouth may be positioned over said second heater nozzle and between said first and third heater nozzles so as to be heated on interior surfaces by said second heater nozzle and on oppositely directed exterior surfaces by said first and third heater nozzles. Preferred features for such nozzle assemblies are described above.

The relatively narrow portion of the band of gas outlet jets adjacent to the shield member may be from 30 to 60 percent the width of the relatively wide portion of said band of jets. Those gas jets which are angled to extend toward the mouth of the carton during use may be arranged at an angle to the nozzle wall as it extends towards the distal end of the nozzle, measured in a plane perpendicular to the wall of the nozzle at the jet, of from 100 to 160°, more preferably 120 to 150°, e.g. 135°.

The invention will be further described and illustrated with reference to the accompanying drawings in which:-
Figure 1 is a plan view of a heater nozzle according to the first aspect of the invention for use in a carton packing machine according to the invention;
Figure 2 is a side elevation showing a first face 20 of the heater nozzle of Figure 1;
Figure 3 is a side elevation showing a second face 22 of the heater nozzle of Figure 1;
Figure 4 is a side elevation showing a third face 24 of the heater nozzle of Figure 1;
Figure 5 is a side elevation showing a fourth face 26 of the heater nozzle of Figure 1;
Figure 6 is a partial cut-away side view of a conventional heater nozzle in use;
Figure 8 is an edge view of a portion of a carton blank being subjected to heating in a method according to the first aspect of the invention; and
Figure 9 shows a blank for use in a carton packing machine according to the invention to form a carton having an easy-opening arrangement.
Figure 10 is a plan view of a heater nozzle assembly according to the first and second aspects of the invention;
Figure 11 shows a blank for use in a carton packing machine according to both aspects of the invention to form a carton having an easy opening arrangement;
Figure 12a is a plan view of a heater nozzle according to the second aspect of the invention incorporating a shield member;
Figure 12b is a front elevation of the nozzle of Figure 12a;
Figure 13a is a plan view of a second heater nozzle for heating the exterior of a carton during sealing which is incorporated in the nozzle assembly of Figure 10;
Figure 13b is a front elevation of the heater nozzle of Figure 13a;
Figure 14a is a plan view of the heater nozzle according to the first aspect of the invention for heating the interior of a carton during sealing incorporated in the nozzle assembly of Figure 10;
Figure 14b is a elevation of the side marked "B" of the heater nozzle of Figure 14a;
Figure 14c is a side elevation showing the side marked "C" of the heater nozzle of Figure 14a;
Figure 14d is a side elevation of the side marked "D" of the heater nozzle of Figure 14a;
Figure 14e is a side elevation of the side marked "E" of the heater nozzle of Figure 14a; and
Figure 15 shows in schematic longitudinal cross-section a portion of the heater nozzle of Figure 12a in use to heat the upper portion of a carton during the closing thereof.

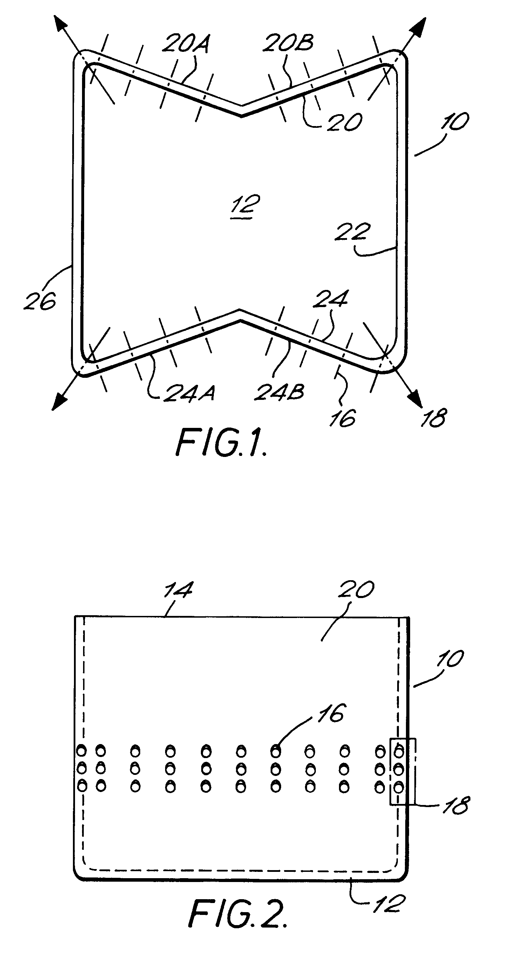

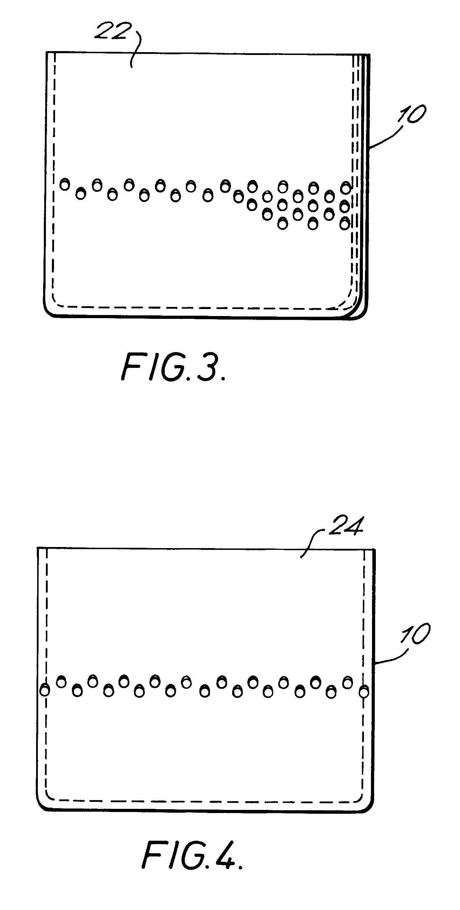

As shown in Figures 1 to 5, a heater nozzle 10 according to the first aspect of the invention has a base wall 12 defining the distal end of the nozzle and side walls 20, 22, 24 and 26 extending down to said base wall 12 from an open proximal gas inlet end 14.

In transverse section the nozzle is seen to be generally rectangular in shape but walls 20 and 24 are rendered concave by each being divided into a pair of wall portions 20A, 20B, 24A, 24B which provide external subsidiary faces which meet at an obtuse angle along a line extending longitudinally of the nozzle and lying a mid plane of the nozzle. The resulting cross-sectional shape is that of a rectangle with a pinched waist.

In each of the four walls 20, 22, 24 and 26 of the nozzle, there are provided a multitude of angled bores 16 forming gas outlet jets for the escape of heated air from the interior of the nozzle. These gas outlet jets lie in a band-shaped zone extending around the nozzle, the width of the zone varying. Each of the bores 16 illustrated extends upwards at an angle of 45° (135°), as measured at right-angles to the respective portion of the wall in which the bore is formed. Generally, when the nozzle is viewed in plan, the bores 16 extend at right-angles to the portion of the wall of the nozzle in which they lie, the exceptions being the groups of bores 18 which lie at the corners of the nozzle which in plan are directed at an angle bisecting the walls forming the respective corner.

The size, number and positioning of the gas outlet jets formed by the bores 16, 18 will be selected to match the desired pattern and extent of heating of the surface of the carton material.

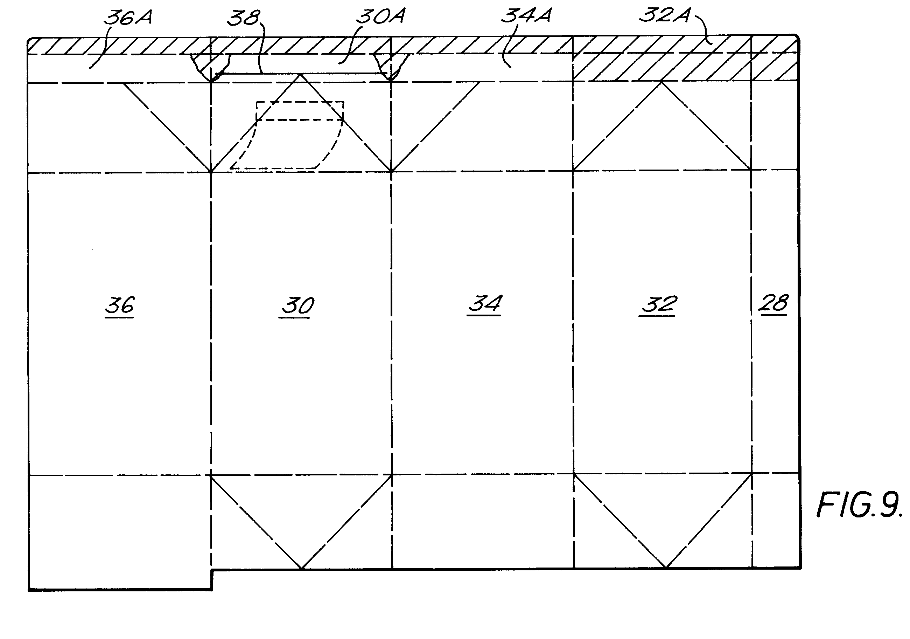

For instance if one considers the form of blank illustrated in Figure 9 in which the desired area of heating for the closing of the top of a carton formed from the blank is shaded, one sees that this pattern of heating can be obtained using the nozzle shown in Figures 1 to 6. The blank is divided into four main panels, namely a front panel 30, a rear panel 32, and side panels 34 and 36 separated by preformed crease lines. Each of these panels is in turn subdivided by transverse preformed crease lines into top forming sub-panels and bottom forming sub-panels and the top forming sub-panels are further sub-divided by transverse preformed crease lines which at the edge of the blank define sub-panels 30A, 32A, 34A and 36A used in forming a sealing fin enclosing a carton formed from the blank in a known manner.

A slit 38 extends across most of the width of the top forming sub-panel of the front panel 30 and that part of the top forming sub-panel below the slit can in the completed carton by pulled forward during opening to form a pouring spout. To permit this to occur, it is necessary that the internal surface of the carton blank is not sealed to itself in the region of the slit 38 during the closing of the top of the blank. A packing machine employing the blank shown in Figure 9 will accept the blank already formed and sealed into a tube by joining its opposite side portions and will include means for forming a bottom closure employing the bottom forming sub-panels. The carton will then be filled. A heater nozzle of the kind shown in Figures 1 to 5 will be inserted into the mouth of the carton and hot air will be directed through the gas outlet jets of the nozzle to warm the interior surface of the carton blank in the shaded zone. It is clearly necessary to control the depth of the heated area on the fin forming sub-panels 30A, 34A and 36A with care to ensure that no seal is formed which would extend below the slit 38.

To this end, the width of the band-shaped zone containing the gas outlet jets in the nozzle of Figures 1 to 5 is varied as follows. Over the wall 20 of the nozzle which heats the sub-panel 32A of the carton blank and zone is of a constant and relatively large width suitable to provide heating to the full depth of the fin forming portion of the blank. Across the wall 24 which serves to heat the sub-panel 30A on the front panel of the blank, the zone is of a constant relatively narrow width which is approximately half the width of the zone on the wall 20. On the walls 22 and 26 of the nozzle which heat the fin forming sub-panels 34A and 36A of the side panels of the blank, the zone has a first portion of said lesser width extending approximately seventy percent of the way across the face of the nozzle from its junction with wall 20 of the nozzle toward its junction with wall 24 of the nozzle and a portion of said greater width occupying the remaining thirty percent of the width of the face of the nozzle and running up to the junction with wall 24 of the nozzle. This portion of greater width provides an increased depth of seal to catch the ends of the slit 38 to ensure good sealing of the carton in that region without interfering with the central part of the slit.

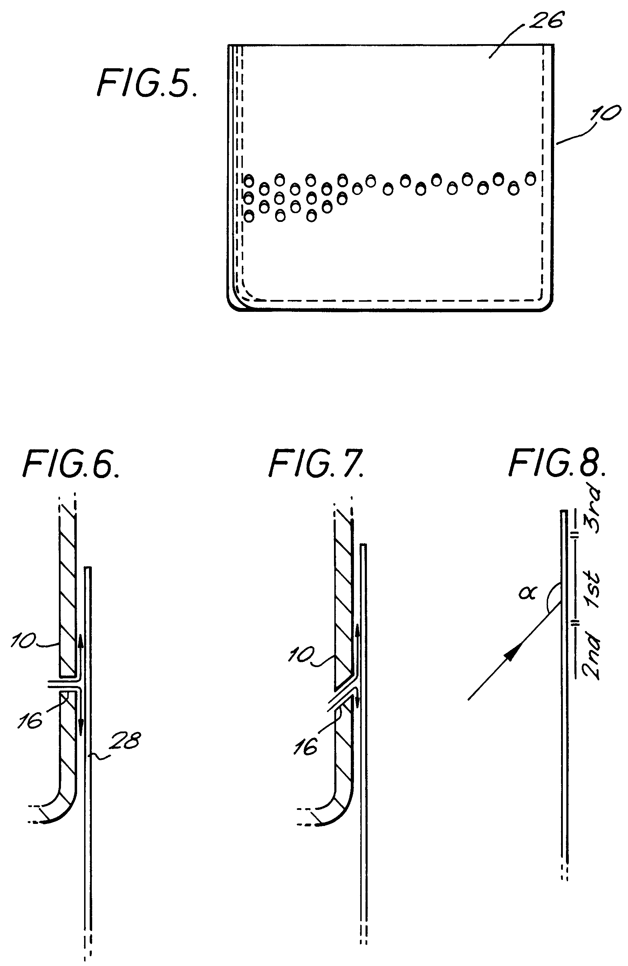

The effect of the use of angled bores to form the gas outlet jets is illustrated in Figures 6 to 8. In the prior art arrangement shown in Figure 6, the flow of hot air from the interior of the nozzle 10 is at right-angles to the nozzle wall and at right-angles to the carton blank 28. As a result, a significant amount of the heating air is deflected in the direction of the carton interior leading to a diffuse heating of the carton wall below the bore 16. The amount of heating which takes place below the bore 16 will depend upon the exact flow rate of air through the bore 16 which will in this type of machine vary from time to time so that it is difficult or impossible to obtain a precisely repeatable zone of heat sealing when the carton closure is made.

In contrast, in the arrangement according to the invention illustrated in Figures 7 and 8 it can be seen that by virtue of angling the bore 16 towards the edge of the carton blank, there is relatively little tendency for the heated air to pass down into the carton and the lower edge of the area of heat sealing is accordingly much better defined.

To seal the exterior surfaces of the carton described above face to face in forming the top closure, one can, in accordance with normal practice in this art, use hot air jets to warm the carton material to a heat-sealing temperature. These jets also may be angled up towards the carton top in a manner similar to the jets on the illustrated nozzle. Where a pull tab of plastics film is provided on the spout-forming part of the carton, it is desirable to use upwardly angled jets to direct the heating air away from the pull tab. This reduces the risk that the pull tab will curl or shrivel in response to heat scattered down the carton wall on to the tab or that the bond between the tab and the carton wall will be loosened by such heat.

More generally, the use of angled jets for heating the carton either on its interior or exterior walls can reduce hot air consumption by ensuring that more of the heated air delivers its heat content to areas where heat is needed and less is scattered on to adjacent areas that do not require to be heated and where heating is, for that reason if no other, to be avoided.

As a further specific example of a situation in which it is necessary to control carefully the extent of a zone of heating enclosing a carton top, one may consider a modification of the blank shown in Figure 9 in which the front fin forming panel 30A is a lesser height than the side fin forming sub-panels 34A and 36A and the intention is to seal the sub-panels 34A and 36A together internally with the sub-panel 30A folded in between them but not caught by the seal between the sub-panels 34A and 36A so that the front top forming sub-panel of the blank may in a completed carton be pulled forward as an opening spout when the carton is opened. As in the case of the blank shown in Figure 9, the use of angled gas outlet jets can be employed to control the depth of the heated area of the fin forming sub-panels 34A and 36A to ensure that the top of the fin forming sub-panel 34A is not caught up inadvertently in the seal between the sub-panels 34A and 36A.

Thus, to improve the ease of opening of a standard gable top carton of known kind one may use a nozzle generally of the kind illustrated in the drawings but with a hole pattern designed to keep the heat away from that part of the closure when four thicknesses of the carton wall are bonded together, except for about a 6 mm length at either end of the spout forming wall. Such a hole pattern would suitably take the form on one concave face 24 of the nozzle of a narrow band of angled jets across the face of the nozzle with extra jets broadening the band adjacent or at the corners of the nozzle, the band on this face having a bottom edge in the form of a shallow inverted "u".

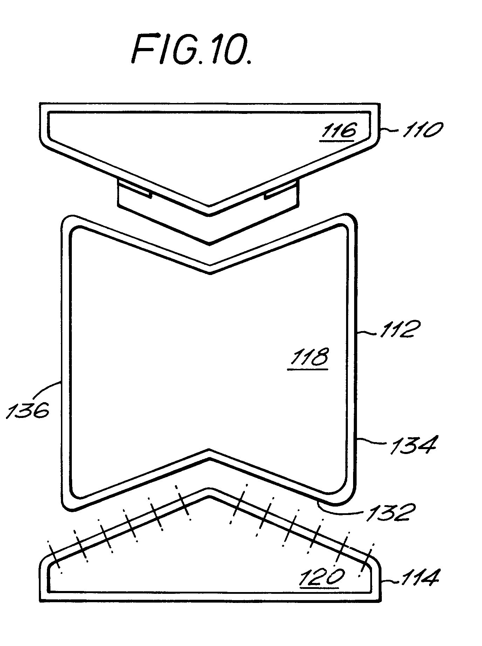

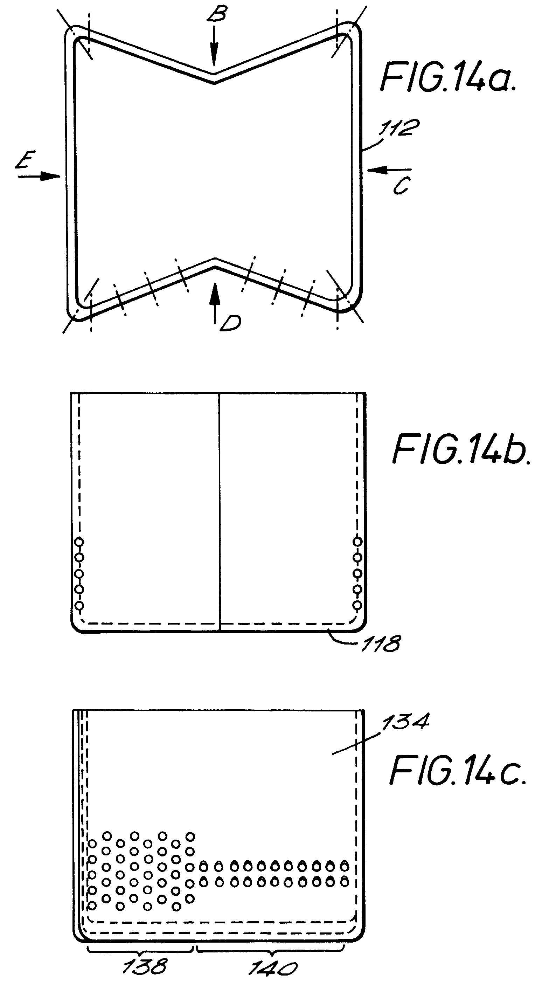

A further illustration of the first aspect of the invention is provided by the embodiment shown in Figures 10 to 15 which also serve to illustrate the second aspect of the invention.

As shown in Figure 10, a heater nozzle assembly according to the first and second aspects of the invention for use in a carton packing machine comprises a first heater nozzle 110, a second heater nozzle 112 and a third heater nozzle 114. Each of these heater nozzles has an open proximal end and a closed distal end 116, 118 and 120 respectively. The heater nozzles are arranged with the first and third heater nozzles lying adjacent opposite respective sides of the second heater nozzle 112 with a gap therebetween so that the mouth of a carton may be fitted over the second heater nozzle 112 and walls of the carton will come to lie between the second heater nozzle 112 and the first and third heater nozzles 110 and 114.

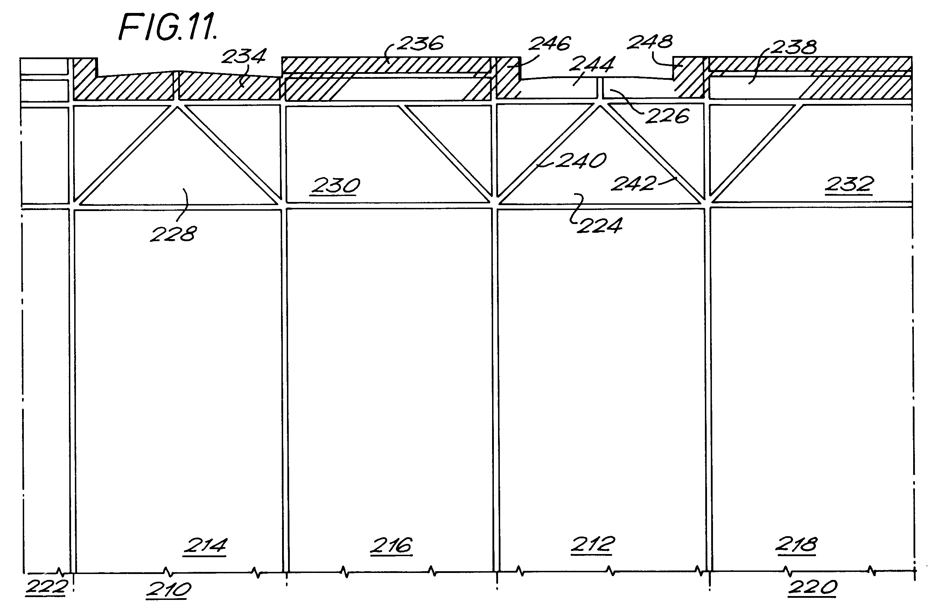

The carton may be formed from a blank as shown in Figure 11 which is adapted to form an easily opened carton. The blank 210 comprises front, rear and opposed side body-forming panels 212, 214, 216 and 218, conventional bottom forming panels 220 and a conventional fifth panel 222 bordering upon rear panel 214. The blank further comprises a top forming front panel 224 having an upper sub-panel 226. It further comprises top-forming rear and side panels 228, 230 and 232, each having a respective fin-forming upper sub panel 234, 236 and 238. The panels are demarcated by preformed crease lines. Additional preformed crease lines are provided for the folding of the top and the bottom of the carton. These include preformed crease lines 240 and 242 extending from the bottom corners of the top-forming front panel 224 to the centre of its upper edge where it borders the sub panel 226.

The sub panel 226 in the top-forming front panel 224 comprises a central region 244 and flanking regions 246 and 248. The height of the central region is substantially less than the height of the flanking regions. When the blank is folded in a conventional manner, a seal may be formed on the interior of the blank in the areas shaded in the drawings. It will be noted that the shaded area does not include any part of the central region 244 of the sub panel 226. The exterior faces of the flanking regions 246 and 248 as well as their internal faces are sealed together and the external faces of the two halves of the central region 224 are sealed to one another. This external seal is easily broken by pulling apart the wing portions formed by the triangular areas of the top-forming panel 224 lying below the sub panel 226. The top-forming front panel can then easily be popped forward as a spout having a rim provided by the top edge of the central region 244 of the sub panel 226.

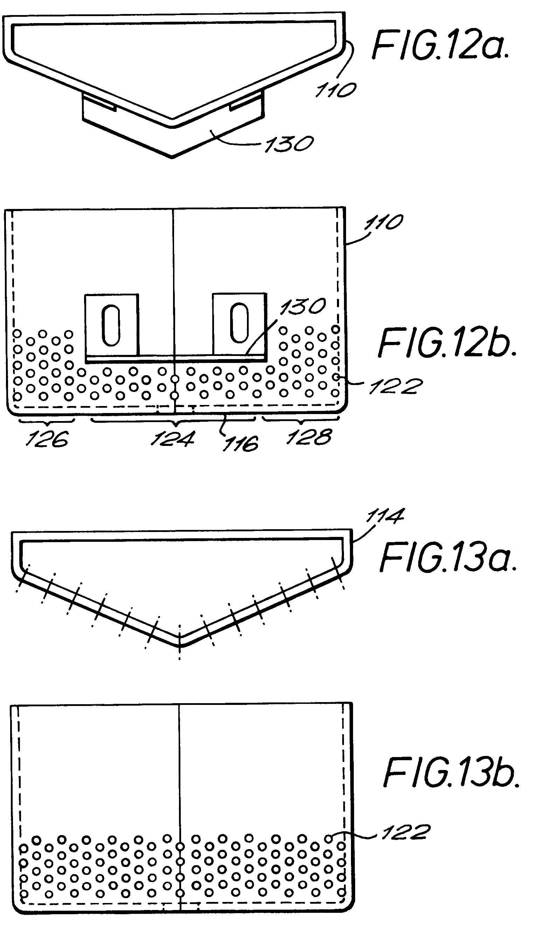

The first heater nozzle 110 of the assembly of Figure 10 is in use directed against top-forming front panel 224 of the carton. As shown in Figures 12a and 12b, the first heater nozzle 10 has a multitude of gas outlet jets 122 extending from its exterior periphery to its interior hollow space and arranged in a band running across two front faces thereof which meet at an angle of 134° defining a shallow nose. The gas outlet jets run perpendicular to their respective faces. The band of outlet jets 122 can be divided into three portions, namely a first central portion 124 and first and second outer portions 126, 128. Outer portions 126 and 128 are relatively wide and the central portion 124 is relatively narrow. Immediately above the central portion 124 is positioned a shield member 130 in the form of a chevron shaped plate projecting from the nose of the nozzle above the central portion 124 of the band of gas outlet jets.

The third nozzle 114 of the assembly of Figure 10 is generally similar in shape to the nozzle 110 but lacks the shield 130 and the band of the gas outlet jets 122 thereon is of constant width. The width of the band of nozzles is similar to that of the wider parts 126, 128 of the band on the nozzle 110. The second heater nozzle 112 of the assembly of the Figure 1 in plan takes the form of a waisted quadrilateral and has two opposite flat side faces and two opposite dished side faces. A band of gas outlet jets runs around the nozzle 112 adjacent its closed end 118. On the dished face 132 which faces the third heater nozzle 114 the band is relatively wide. The jets are directed at right angles to the face 132 with the exception of those jets lying on the corners between the face 132 and the adjacent side faces which are directed at about 45° outward to the side from the face 132.

On each of the two flat faces 134, 136, the band of jets has a first portion 138 of greater width and a second portion 140 of lesser width, the length of the portion 140 being slightly greater than that of the portion 138 and the width of the portion 140 being approximately one third of that of the portion 138. On the remaining face of the nozzle 112, no gas outlet jets are provided except at the corner junctions between that face and the faces 132, 136 where a relatively tall column of gas outlet jets is provided which are directed at about 45° to the adjacent side faces 134, 136.

Those gas outlet jets in the relatively narrow portions 40 of the band on the side faces 134 and 136 are angled upwardly at about 45° away from the base 118 of the nozzle 112. This controls the depth of the heated zone produced in the critical area adjacent the top edge of the central region 244 of the panel 224 which forms the spout.

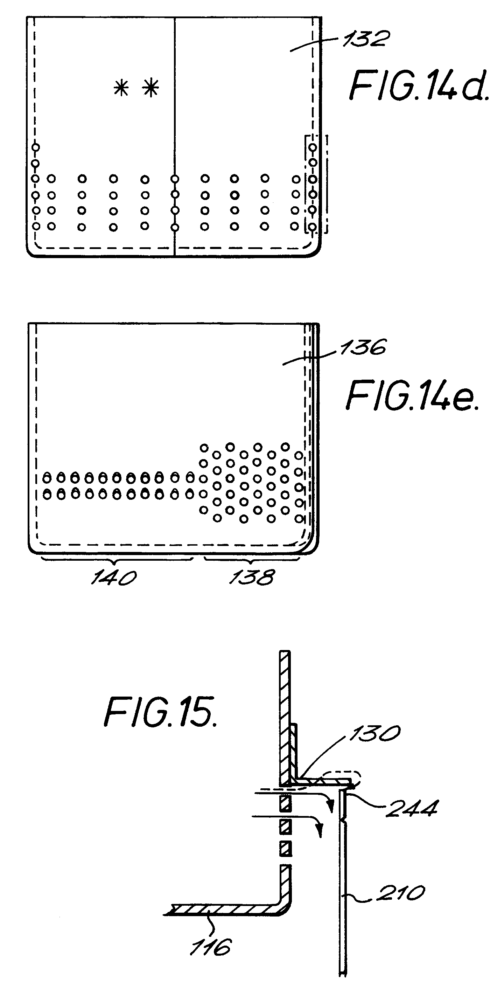

As shown in Figure 15, the effect of the shield 130 is to block hot air passing through the gas outlet jets in the region 124 of the band of jets in nozzle 110 from following the dotted path in Figure 15 to reach the interior surface of the carton along the upper free edge of the central region 244 of the top-forming front panel 224 where it is important that no heat seal is inadvertently obtained. Instead, gas flow is diverted downwardly over the exterior of the wall of the carton blank 210. This improves the reliability with which an easy opening carton of the kind formed from a blank shown in Figure 11 can be sealed satisfactorily with the spout forming portion free to pull forward as the carton is opened by tearing the external seal between the surrounding portions of the carton wall.

Many modifications and variations of the invention as described with reference to the drawings are possible within the scope of the invention.

## Claims

1. A carton packing machine comprising means for joining portions of a carton to one another by heat-sealing to close the top of said carton, which means comprises a heater having a heater nozzle (10) for fitting inside the mouth of a carton to be closed, which nozzle has a plurality of gas outlet jets (16, 18) for the supply of heated gas to warm said carton portions to a sealing temperature by directing said heated gas on to said portions, characterised in that said jets are arranged so as in use to be directed at an oblique angle on to said carton portion and toward said carton mouth.

2. A machine as claimed in Claim 1, wherein said nozzle (10) has a proximal gas inlet (14) and a closed distal end (12) for insertion into a carton mouth and comprises nozzle walls (20, 26) enclosing a gas passageway and further comprises a multitude of said gas outlet jets (16, 18) extending from the said gas passageway to the external surface of said walls obliquely away from said distal end.

3. A machine as claimed in Claim 2, wherein said nozzle is generally rectangular in transverse cross-section and wherein said multitude of jets is arranged in a band shaped zone around at least three faces of said nozzle.

4. A machine as claimed in Claim 3, wherein on each of a pair of opposed faces (22, 26) of said nozzle said zone has a first portion of lesser width and a second portion of greater width, said second portions lying adjacent corresponding edges of their respective faces, and wherein that part of the zone that lies on the face (24) of the nozzle joining said edges and connects said second portions is of a width smaller than said greater width.

5. A carton packing machine comprising means for joining portions of a carton to one another by heat-sealing, which means comprises a heater nozzle (110) having at least one gas outlet jet (122) for the supply of heated gas to warm a said carton portion to a sealing temperature by directing said heated gas on to said portion, characterised in that said nozzle is provided with a shield member (130) extending from the nozzle in the general direction of gas flow from said jet.

6. A machine as claimed in Claim 5, wherein said nozzle has a proximal gas inlet and a closed distal end (116) and comprises nozzle walls enclosing a gas passageway and further comprises a multitude of gas outlet jets (122) extending from the said gas passageway to the external surface of said walls.

7. A machine as claimed in Claim 6, wherein said nozzle walls include a pair of substantially planar walls which meet at an obtuse angle and comprise a band of said gas outlet jets (122) extending from said gas passageway to the external surface of said walls, and wherein said shield member lies immediately adjacent said band and extends alongside a portion thereof.

8. A machine as claimed in any one of Claims 5 to 7, wherein said band has a first portion of lesser width (124) and second and third portions (126, 128) of greater width, said second and third portions lying at respective ends of said first portion and said shield member (130) extending alongside said first portion between said second and third portions of said band.

9. A hot air nozzle (10) for a carton packing machine which nozzle has a proximal gas inlet (14) and a distal end (12) for insertion into a carton mouth and is generally rectangular in transverse cross-section, but in which each of a pair of opposed faces (20, 24) of said nozzle is externally concave when viewed in transverse cross-section, and comprises nozzle walls (20, 26) enclosing a gas passageway and further comprises a multitude of gas outlet jets (16, 18) extending from the said gas passageway to the external surface of said walls, characterised in that said jets emerge obliquely away from said distal end.

10. A hot air nozzle for a carton packing machine which has a proximal gas inlet and a closed distal end (116) and comprises nozzle walls enclosing a gas passageway and further comprises a multitude of gas outlet jets (122) extending from the said gas passageway to the external surface of at least one of said walls characterised in that said nozzle has a heat shield member (130) extending from said nozzle in the general direction of gas flow from said jets.

11. A nozzle assembly which includes a heater nozzle (110) claimed in Claim 10 as a first heater nozzle and further includes a second heater nozzle (112) and a third heater nozzle (114), wherein said first and third heater nozzles are disposed one on either side of said second heater nozzle such that a carton mouth may be positioned over said second heater nozzle and between said first and third heater nozzles so as to be heated on interior surfaces by said second heater nozzle and on oppositely directed exterior surfaces by said first and third heater nozzles.

12. A nozzle assembly as claimed in Claim 11, wherein said second nozzle (112) has a multitude of gas outlet jets (122) arranged in a band extending around approximately three quarters of the perimeter of said nozzle including that part thereof which is opposite to said third nozzle (114) and those parts extending between said third nozzle and said first nozzle, and wherein said band of gas outlet jets on said second nozzle (112) is relatively wide opposite said third nozzle (114) and on each of those parts extending between said third nozzle and said first nozzle (110) has a relatively wide portion (138) nearest to said third nozzle and a relatively narrow portion (140) extending therefrom toward said first nozzle.

13. A nozzle as claimed in Claim 12, wherein the gas outlet jets in said relatively narrow portions (140) of said band are angled to extend in use toward the mouth of a container being closed in said machine.

14. A method of heating a heat sealable portion of a carton blank in closing a carton by heat sealing, which method comprises directing heated gas on to a first zone of said blank to warm said first zone to a heat sealing temperature, said first zone being bordered on one side by a second zone which contains the upper margin of a pull-out spout portion of the blank or is to be bonded to a zone which contains the upper margin of a pull-out spout portion of the blank the heating of which is unwanted, and being bordered on the opposite side by an edge of the blank or by a third zone, the heating of which can be tolerated, characterised in that said heated gas is discharged on to said first zone of the blank through jets directed obliquely away from said second zone and towards the said edge of the blank or said third zone.
